# EUROPÄISCHE PATENTSCHRIFT

(11) **EP 3 073 875 B1**
(45) Veröffentlichungstag und Bekanntmachung des Hinweises auf die Patenterteilung: **02.08.2017**
(21) Anmeldenummer: 15781309.8
(22) Anmeldetag: 30.09.2015
(51) Int. Cl.: A47J 31/44

(54) **GETRÄNKEZUBEREITUNGSVORRICHTUNG**
BEVERAGE PREPARATION DEVICE
APPAREIL DE PRÉPARATION DE BOISSONS

(30) Priorität: 09.10.2014 DE 102014114699
(43) Veröffentlichungstag der Anmeldung: 05.10.2016
(73) Patentinhaber: Eugster/Frismag AG, 8580 Amriswil (CH)
(72) Erfinder: MEIER, Marco, CH-8634 Hombrechtikon (CH)
(74) Vertreter: Wagner, Kilian
(86) Internationale Anmeldenummer: PCT/EP2015/072569
(87) Internationale Veröffentlichungsnummer: WO 2016/055327

(56) Entgegenhaltungen:
- EP-A1- 1 512 354
- EP-A1- 2 628 422

## Beschreibung

Die Erfindung betrifft eine Kaffeemaschine, gemäß dem Oberbegriff des Anspruchs 1 mit einem ersten und einem zweiten Auslauf für ein Getränk sowie mit Einstellmitteln zum Einstellen des Abstandes zwischen dem ersten und dem zweiten Auslauf, wobei der erste und der zweite Auslauf bevorzugt an eine gemeinsame Versorgungsleitung zum gleichzeitigen Versorgen beider Ausläufe mit einem Getränk verbunden sind. Ferner betrifft die Erfindung ein Verfahren zum Einstellen des Abstandes zwischen einem ersten und einem zweiten Auslauf einer Getränkezubereitungsvorrichtung gemäß dem Oberbegriff des Anspruchs 13.

Die EP 2 628 422 A1 beschreibt einen vertikal verstellbaren Getränkeauslaufkopf mit horizontal verstellbaren Auslaufdüsen für eine Heißgetränkemaschine.

Aus der EP 1 512 354 A1 ist eine Getränkezubereitungsvorrichtung mit zwei Ausläufen bekannt, wobei die Ausläufe zum Verstellen des Horizontalabstandes um jeweils eine vertikale Achse verdrehbar sind. Die Abstandseinstellung erfolgt dabei stufenlos. Als Nachteil wird empfunden, dass es nur schwer möglich ist, wiederholt definierte (bestimmte) Abstände einzustellen. Darüber hinaus ist die bekannte Lösung kostenintensiv und hinsichtlich ihrer Robustheit verbesserungswürdig.

Aus der DE 34 25 943 C1 ist eine Getränkezubereitungsvorrichtung bekannt, bei der zwei Ausläufe von knickbaren Auslaufröhrchen gebildet sind, die voneinander wegspreizbar sind. Bei einer Betätigung sind die Ausläufe nur bei minimalem Abstand parallel zueinander ausgerichtet. Darüber hinaus wird auch bei dieser bekannten Ausführungsform als nachteilig empfunden, dass definierte (bestimmte) Abstände nur schwer wiederholt eingestellt werden können. Insbesondere ist die Relativposition der Ausläufe starr über eine gemeinsame Führungskulisse gekoppelt.

Aus der DE 10 2012 202 182 A1 ist ein Getränkeauslaufkopf bekannt, bei dem zwei Ausläufe relativ zueinander verstellbar sind, indem gleichzeitig deren Höhenposition verändert wird.

Ausgehend von dem vorgenannten Stand der Technik liegt daher der Erfindung die Aufgabe zugrunde, eine Getränkezubereitungsvorrichtung anzugeben, die kostengünstig realisierbare und robuste Einstellmittel zur Einstellung (Variation) des Abstandes zwischen einem ersten und mindestens einem zweiten Auslauf aufweist, wobei die Einstellmittel bevorzugt so ausgebildet sind, dass definierte (bestimmte) Abstände auf einfache Weise immer wieder eingestellt bzw. vom Benutzer gewählt werden können. Darüber hinaus besteht die Aufgabe darin, ein Verfahdass die Auslaufenden der Ausläufe in jeder Relativposition vertikal und/oder parallel zueinander orientiert sind.

Diese Aufgabe wird hinsichtlich der Getränkezubereitungsvorrichtung mit den Merkmalen des Anspruchs 1 gelöst, also bei einer gattungsgemäßen Getränkezubereitungsvorrichtung dadurch, dass gemäß einer ersten Option die Elnstellmittel eine erste Führungskulissenbahn umfassen, und dass der entlang einer ersten Bewegungsbahn verstellbare erste Auslauf über erste Kopplungsmitteln mit entlang der ersten Führungskulissenbahn verstellbaren ersten Abgreifermitteln gekoppelt ist, und dass die erste Führungskulissenbahn mindestens zwei unterschiedliche erste Haltepositionen für die ersten Abgreifermittel und damit aufgrund der Kopplung mit den ersten Haltepositionen korrespondierende erste Stopppositionen für den ersten Auslauf entlang seiner ersten Bewegungsbahn definiert, und dass den ersten Abgreifermitteln, sich vorzugsweise an dem ersten Auslauf abstützende, Federmittel, zugeordnet sind, die die ersten Abgreifermittel in die jeweilige erste Halteposition hinein mit einer Federkraft beaufschlagend ausgebildet und angeordnet sind, und dass gemäß einer zusätzlich oder alternativ zur ersten Option realisierbaren zweiten Option die Einstellmittel eine zweite Führungskulissenbahn umfassen, und dass der entlang einer zweiten Bewegungsbahn verstellbare zweite Auslauf über zweite Kopplungsmitteln mit entlang der zweiten Führungskulissenbahn verstellbaren zweiten Abgreifermitteln gekoppelt ist, und dass die zweite Führungskulissenbahn mindestens zwei unterschiedliche zweite Haltepositionen für die zweiten Abgreifermittel und damit aufgrund der Kopplung mit den zweiten Haltepositionen korrespondierende zweite Stopppositionen für den zweiten Auslauf entlang seiner zweiten Bewegungsbahn definiert, und dass den zweiten Abgreifermitteln, sich vorzugsweise an dem zweiten Auslauf abstützende Federmittel, zugeordnet sind, die die zweiten Abgreifermittel in die jeweilige zweite Halteposition hinein mit einer Federkraft beaufschlagend ausgebildet und angeordnet sind.

Hinsichtlich des Verfahrens wird die Aufgabe mit den Merkmalen des Anspruchs 12 gelöst, d.h. bei einem gattungsgemäßen Verfahren dadurch, dass der über erste Kopplungsmittel mit entlang einer ersten Führungskulissenbahn verstellbaren ersten Abgreifermitteln gekoppelte erste Auslauf zum Einstellen des Abstandes entlang einer ersten Bewegungsbahn in eine von mindestens zwei ersten Stopppositionen verstellt wird, die von jeweils einer ersten Halteposition für die ersten Abgreifermittel entlang der ersten Führungskulissenbahn definiert werden, und dass die ersten Abgreifermittel, insbesondere mittelbar über den ersten Auslauf, mit einer Federkraft in jeweilige erste Halteposition beaufschlagt werden und dass der über zweite Kopplungsmittel mit entlang einer zweiten Führungskulissenbahn verstellbaren zweiten Abgreifermitteln gekoppelte zweite Auslauf zum Einstellen des Abstandes entlang einer zweiten Bewegungsbahn in eine von mindestens zwei zweiten Stopppositionen verstellt wird, die von jeweils einer zweiten mit entlang einer zweiten Führungskulissenbahn verstellbaren zweiten Abgreifermitteln gekoppelte zweite Auslauf zum Einstellen des Abstandes entlang einer zweiten Bewegungsbahn in eine von mindestens zwei zweiten Stopppositionen verstellt wird, die von jeweils einer zweiten Halteposition für die zweiten Abgreifermittel entlang der zweiten Führungskulissenbahn definiert werden, und dass die zweiten Abgreifermittel, insbesondere mittelbar über den zweiten Auslauf, mit einer Federkraft in jeweilige zweite Halteposition beaufschlagt werden.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder in den Figuren offenbarten Merkmalen. Zur Vermeidung von Wiederholungen sollen vorrichtungsgemäß offenbarte Merkmale als verfahrensgemäß offenbart gelten und beanspruchbar sein, ebenso sollen verfahrensgemäß offenbarte Merkmale auch als vorrichtungsgemäß offenbart gelten und beanspruchbar sein.

Der Erfindung liegt der Gedanke zugrunde, als Bestandteil der Einstellmittel zum Verstellen des ersten und oder zweiten Auslaufes eine erste und eine zweite Kulissenbahn vorzusehen, entlang derer über Kopplungsmittel mit dem jeweiligen Auslauf gekoppelte Abgreifermittel verstellbar sind, wobei die Kulissenbahnen jeweils mindestens zwei unterschiedliche (definierte) Haltepositionen (insbesondere Rastpositionen) für die entsprechenden Abgreifermittel definieren, wobei jeder Halteposition für die Abgreifermittel aufgrund der Kopplung mit dem zugehörigen Auslauf über die zugehörigen Kopplungsmittel eine Stoppposition entlang der Bewegungsbahn des Auslaufs zugeordnet ist. Die Abgreifermittel sind zudem mittelbar oder unmittelbar mit Hilfe von entsprechenden Federmitteln in die jeweilige Halteposition hinein federkraftbeaufschlagt, um die Abgreifermittel so in der jeweiligen Halteposition zu sichern. Mit andern Worten sind die Federmittel derart ausgebildet und angeordnet, dass die Abgreifermittel fest in der jeweiligen Halteposition und somit der zugeordnete Auslauf in der jeweiligen Stoppposition gesichert bzw. fixiert ist. Hierdurch wird ein unbeabsichtigtes Verstellen, beispielsweise aufgrund von Vibrationen der Getränkezubereitungsvorrichtung sicher vermieden und die jeweilige definierte Position sicher gehalten.

Das Vorsehen von mindestens zwei Haltepositionen (Rastpositionen) für die Abgreifermittel und damit von mindestens zwei definierten Stopppositionen für den zugeordneten Auslauf entlang seiner Bewegungsbahn hat gegenüber den bekannten Verschwenk- oder Biegemechanismen erhebliche Vorteile. So lässt sich eine Führungskulissenbahn und deren Abgreif- sowie Kopplungsmechanismus mit dem Auslauf einfach und kostengünstig realisieren und ist darüber hinaus robust. Ein Hauptvorteil besteht zudem darin, dass mindestens zwei, vorzugsweise mehr als zwei, beispielsweise genau drei oder genau vier definierte Haltepositionen für den der Führungskulissenbahn zugeordneten und über die zugehörigen Kopplungsmittel gekoppelten Auslauf vorgegeben werden können, so dass also bestimmte bzw. definierte Abstände zwischen den Ausläufen wiederholt genau eingestellt werden können, was bei den bekannten stufenlosen Schwenkmechanismen nicht der Fall ist. Die Federkraftbelastung der Abgreifermittel (unmittelbar oder mittelbar) beispielsweise über eine Federkraftbeaufschlagung des mit den Abgreifermitteln (kraftübertragend bzw. mechanisch) gekoppelten Auslaufs garantiert nicht nur eine Sicherung des Auslaufs in der jeweiligen (einer korrespondierenden Halteposition zugeordneten) Stoppposition, sondern ermöglicht ein vereinfachtes Verstellen des jeweiligen Auslaufs entlang seiner Bewegungsbahn. Hierzu muss der entsprechende Auslauf, insbesondere manuell entgegen der Federkraft kraftbeaufschlagt werden - die gewünschte Halteposition der Abgreifermittel und damit die korrespondierende Stoppposition des Auslaufs stellt sich dann quasi automatisch ein, wenn die Kraftbeaufschlagung unterbrochen wird bzw. unterbleibt.

Erfindungsgemäß ist vorgesehen, dass beiden, insbesondere sämtlichen, Ausläufen jeweils eine Führungskulissenbahn, Abgreifermittel und Kopplungsmittel zugeordnet sind, die jeweils Haltepositionen für die zugeordneten Abgreifermittel und damit Stopppositionen für den jeweiligen Auslauf definiert, um dann beide Ausläufe, je nach Ausgestaltung entweder unabhängig voneinander oder, was bevorzugt ist, synchron entlang der jeweiligen Bewegungsbahn zur Einstellung des Abstandes zwischen definierten Stopppositionen, vorzugsweise in Stufen, zu verstellen. Bevorzugt sind die ersten und/oder zweiten Kopplungsmittel zum Übertragen von Zug- und/oder Druckkräften ausgebildet und angeordnet.

Im Hinblick auf die konkrete Ausbildung der ersten oder zweiten Führungskulissenbahn gibt es unterschiedliche Möglichkeiten. So kann eine Führungskulissenbahn beispielsweise von einer, insbesondere umfangsgeschlossenen, d.h. ringförmigen Schiene gebildet werden oder von einer, bevorzugt umfangsgeschlossenen Führungsnut, wobei die Abgreifermittel - unabhängig von der konkreten Ausgestaltung der Führungskulissenbahn - mit dieser zusammenwirkend ausgebildet sind, so dass von diese bei einer Bewegung entlang der Führungskulissenbahn die Bahnform abgegriffen werden kann.

Ganz besonders bevorzugt ist es, wenn die erste Führungskulissenbahn und vorzugsweise für den Fall des Vorsehens von zwei Führungskulissenbahnen auch die zweite Führungskulissenbahn umfangeschlossen ist, bzw. sind so dass die jeweiligen Abgreifermittel entlang einer Ringbahn, vorzugsweise nicht einer Kreisringbahn, entlang der Führungskulissenbahn verstellbar sind, so dass ein beliebiger Punkt auf der Führungskulissenbahn durch Verstellen der jeweiligen Abgreifermittel ausschließlich in einer Umfangsrichtung um die Bewegungsbahn wieder durchlaufen werden kann.

Grundsätzlich ist es möglich, die Kopplungsmittel starr, beispielsweise als starrer Verbindungsarm auszubilden, wobei dann die Abgreifermittel beispielsweise von einem Ende dieses Arms gebildet sein können. In diesem Fall entspricht für den Fall der nicht gelenkigen Anordnung bzw. Ausbildung der Kopplungsmittel der Bahnverlauf der Bewegungsbahn des zugeordneten Auslaufs dem Bahnverlauf der Führungskulissenbahn. Dies hat jedoch dann einen zweidimensionalen Verlauf der Bewegungsbahn des Auslaufs zur Folge, was in Weiterbildung der Erfindung jedoch vermieden wird. Um den Bahnverlauf der Bewegungsbahn des jeweiligen Auslaufs unabhängig zu gestalten vom Bahnverlauf (Bahnform) der Führungskulissenbahn ist daher in Weiterbildung der Erfindung vorgesehen, dass die ersten Kopplungsmittel derart ausgebildet sind, dass der Bahnverlauf, d.h. die Bahnform der ersten Bewegungsbahn vom Bahnverlauf der Führungskulissenbahn abweicht, wobei es besonders bevorzugt ist, wenn die Bewegungsbahn eines Auslaufs ausschließlich entlang einer Geraden verläuft bzw. eindimensional ist. Auf diese Weise kann sichergestellt werden, dass der Abstand des entsprechend gekoppelten Auslaufs zu einem feststehenden Gehäuse der Getränkezubereitungsvorrichtung unabhängig von der Position entlang der Bewegungsbahn gleich bleibt, unabhängig von dem, vorzugsweise umfangsgeschlossenen Verlauf der Führungskulissenbahn.

Anstelle einer geradlinigen Bewegungsbahn für den Auslauf kann auch eine zweidimensionale, beispielsweise bogenförmige Bahn gewählt werden, wenn gewünscht ist, dass gleichzeitig mit einer Abstandsänderung der Ausläufe eine Abstandsänderung mindestens eines Auslaufs zu einem Getränkezubereitungsvorrichtungsgehäuse einhergeht. Unabhängig von der konkreten Ausgestaltung des Bewegungsbahnverlaufs der ersten oder zweiten Bewegungsbahn ist diese bevorzugt nicht umfangsgeschlossen, sondern der Auslauf wird entlang der Bewegungsbahn hin- und herbewegt.

Zur Realisierung einer vom Führungskulissenbahnverlauf unterschiedlichen Bewegungsbahnverlauf hat es sich als vorteilhaft herausgestellt, wenn die ersten und oder zweiten Kopplungsmittel zumindest abschnittsweise flexibel, beispielsweise als elastisch verbiegbarer Kunststoffstreifen oder -arm ausgebildet sind und/oder mindestens eine, vorzugsweise zwei Gelenkverbindungen umfassen.

Besonders von Vorteil im Hinblick auf eine konstruktiv besonders einfache und robuste Realisierung der Abgreifer- und Kopplungsmittel hat es sich herausgestellt, wenn die Kopplungsmittel als, vorzugsweise starrer, gelenkig gelagerter Arm ausgebildet sind, wobei ein, bevorzugt abgewinkeltes, Ende oder Abschnitt des Arms die Abgreifermittel bildet, die entlang der zugehörigen Führungskulissenbahn verstellbar sind, wobei dieses Armende bzw. dieser Armabschnitt vorzugsweise bei seiner Bewegung entlang der Führungskulissenbahn in oder an der Führungskulissenbahn verschwenkbar angeordnet ist. Weiter bevorzugt ist ein gegenüberliegendes Ende oder Abschnitt des Arms verschwenkbar bzw. gelenkig mit dem Auslauf, vorzugsweise einem Auslaufgehäuseabschnitt verbunden, so dass die Kopplungsmittel mit ihren integrierten Abgreifermitteln sowohl eine gelenkige Verbindung mit der Führungskulissenbahn als auch mit dem Auslauf sicherstellen. Anstelle einer gelenkigen Verbindung mit dem Auslauf können die Kopplungsmittel auch elastisch verbiegbar ausgebildet sein.

Als besonders vorteilhaft hat es sich herausgestellt, wenn zumindest einer der Ausläufe derart mit den ihm zugeordneten, bevorzugt in die Kopplungsmittel integrierten bzw. von diesen gebildeten oder alternativ davon separaten, Abgreifermitteln gekoppelt ist, dass dieser Auslauf bei einem vollständigen Umlauf der zugehörigen Abgreifermittel um die bzw. entlang der zugehörigen Kulissenführungsbahn entlang seiner, bevorzugt geradlinigen Bewegungsbahn einmal hin- und herverstellbar ist. Diese Ausführungsform ermöglicht es, dass durch wiederholtes Drücken des Auslaufs, insbesondere in einer Horizontalebene, entgegen der Federkraftbelastung unterschiedliche Abstandspositionen zwischen den Ausläufen auf einfache Weise angefahren werden können. Ganz besonders bevorzugt ist es dabei, wenn beide Ausläufe synchron in jeweils einander entgegengesetzte Richtungen, vorzugsweise jeweils entlang einer Geraden verstellbar sind bzw. verstellt werden.

Wie erwähnt sind die Abgreifermittel in die jeweilige Halteposition hinein federkraftbeaufschlagt. Dies kann unmittelbar realisiert werden, indem eine entsprechende Feder direkt an den Abgreifermitteln angreift. Bevorzugt erfolgt die Federkraftbeaufschlagung jedoch mittelbar, insbesondere indem sich mindestens eine Feder an dem den Abgreifermitteln zugeordneten Auslauf abstützt, was insbesondere dann von Vorteil ist, wenn der zugehörige Auslauf ausschließlich entlang einer Geraden verstellbar ist.

Ganz besonders zweckmäßig ist es, wenn für den Fall des Vorsehens von mindestens zwei Abgreifermitteln für unterschiedliche Ausläufe gemeinsame Federmittel zum Beaufschlagen mehrerer, insbesondere beider Abgreifermittel in eine jeweilige Halteposition vorgesehen sind, wobei es besonders zweckmäßig ist, wenn diese gemeinsamen Federmittel den ersten und den zweiten Auslauf, insbesondere voneinander weg federkraftbeaufschlagen, insbesondere in einer Horizontalebene. Mit einem Blick auf die Frontseite einer Getränkezubereitungsvorrichtung ist es besonders vorteilhaft, wenn einer der Ausläufe nach rechts und der andere nach links federkraftbelastet sind. Im Hinblick auf eine mögliche kostengünstige und robuste Realisierung von gemeinsamen Federmitteln hat es sich als vorteilhaft herausgestellt, wenn als gemeinsame Federmittel eine Druckfeder vorgesehen ist, die zwischen den Ausläufen angeordnet ist und diese voneinander weg, d.h. in einander entgegengesetzte Richtung federkraftbeaufschlagt.

Eine besonders robuste und kostengünstige Weise zur Realisierung der Haltepositionen (und damit der Stoppposition mindestens eines Auslaufs) besteht darin, wenn die Haltepositionen durch einen Richtungswechsel, insbesondere einen Kurven- oder Eckabschnitt der Kulissenführungsbahn gebildet bzw. definiert sind, wobei die Abgreifermittel mit Hilfe von den mittelbar oder unmittelbar auf diese wirkenden Federmitteln in die sich aus dem Richtungswechsel ergebende Führungskulissenbahnkurve oder -ecke hinein federkraftbelastet sind. Zusätzlich oder alternativ ist es möglich, einen Halteabschnitt durch einen Sackgassenabschnitt der Führungskulissenbahn auszubilden, in den hinein die Abgreifermittel federkraftbeaufschlagt sind, wobei zum Wechseln diese Halteposition die Abgreifermittel, insbesondere durch Drücken gegen den zugeordneten Auslauf entgegen der Federkraftbelastung aus dem Sackgassenabschnitt, insbesondere entgegen einer vorhergehenden Hineinbewegungsrichtung, wieder hinaus bewegt werden muss.

Für den vorliegenden Fall der Realisierung von zwei jeweils mit einer Führungskulissenbahn gekoppelten, jeweils entlang einer Bewegungsbahn verstellbaren Ausläufen hat es sich als vorteilhaft erwiesen, wenn die Führungskulissenbahnen und/oder die Bewegungsbahnen der Ausläufe spiegelsymmetrisch angeordnet und ausgebildet sind, insbesondere spiegelsymmetrisch zu einer mittig zwischen den Ausläufen angeordneten bzw. verlaufenden Vertikalebene, die vorzugsweise rechtwinklig zu einer Rückwand der Getränkezubereitungsvorrichtung und/oder parallel zu einer Seitenwand derselben ausgerichtet ist.

Als besonders vorteilhaft hat es sich herausgestellt, wenn die Ausläufe der Getränkezubereitungsvorrichtung zusammen mit den Einstellmitteln vertikal verstellbar sind, wobei es die erfindungsgemäße Ausgestaltung der Einstellmittel ermöglicht, dass die Auslaufenden der Ausläufe in jeder Position der Ausläufe entlang der ersten bzw. zweiten Bewegungsbahn vertikal und parallel zueinander orientiert sind.

Die Erfindung führt auch auf ein Verfahren zum, bevorzugt gestuften bzw. definierten, Einstellen des Abstandes zwischen einem ersten Auslauf und einem zweiten Auslauf einer Getränkezubereitungsvorrichtung, wobei es sich bevorzugt bei der Getränkezubereitungsvorrichtung um eine nach dem Konzept der Erfindung ausgebildete Getränkezubereitungsvorrichtung handelt.

Erfindungsgemäß ist nun vorgesehen, dass beide jeweils über Kopplungsmittel mit entlang einer zugeordneten Führungskulissenbahn verstellbare, vorzugsweise von den Kopplungsmitteln gebildete, Abgreifermittel gekoppelte Ausläufe zum Einstellen des Abstandes zwischen den Ausläufen entlang einer jeweiligen Bewegungsbahn in eine von mindestens zwei Stopppositionen verstellt werden, die von jeweils einer Halteposition für die Abgreifmittel entlang der Führungskulissenbahn definiert bzw. vorgegeben werden, und dass die Abgreifermittel, entweder unmittelbar oder bevorzugt mittelbar über eine Federkraftbelastung des Auslaufs mit einer Federkraft in die jeweilige Halteposition beaufschlagt werden. Erfindungsgemäß wird das Verfahren bevorzugt gleichzeitig, bei beiden Ausläufen realisiert, d.h. beide Ausläufe gleichzeitig entlang ihrer jeweiligen Bewegungsbahn von Stoppposition zu Stoppposition verstellt werden, wobei gleichzeitig aufgrund der Kopplung mit den Ausläufen entsprechende Abgreifermittel entlang der jeweiligen Führungsbahn von Halteposition zu Halteposition bewegt werden.

Als besonders zweckmäßig hat es sich herausgestellt, wenn die beiden Ausläufe über entsprechende Führungsmittel so geführt sind, dass die Bewegungsbahnen der Ausläufe entlang einer Achse miteinander fluchten, wobei die beiden Ausläufe bevorzugt synchron entlang der jeweiligen Bewegungsbahn verstellt werden, ganz besonders bevorzugt gleichzeitig in einander entgegengesetzte Richtungen bzw. Axialrichtungen.

Besonders zweckmäßig hat es sich herausgestellt, wenn die beiden Ausläufe über entsprechende Führungsmittel so geführt sind, dass die Bewegungsbahnen der Ausläufe miteinander fluchten, wobei die beiden Ausläufe bevorzugt synchron entlang der jeweiligen Bewegungsbahn verstellt werden, ganz besonders bevorzugt gleichzeitig in einander entgegengesetzte Richtungen bzw. Axialrichtungen.

Besonders zweckmäßig ist es, wenn das Verfahren durch eine entsprechende Ausbildung, insbesondere gelenkige und/oder flexible Ausbildung der Kopplungsmittel so durchgeführt wird, dass bei einer vollständigen Hin- und Herbewegung zumindest eines Auslaufs entlang von dessen Bewegungsbahn die zugehörigen Abgreifermittel einmal die zugehörige Führungskulissenbahn umrunden.

Insbesondere für den Fall, dass die beiden Ausläufe jeweils entlang einer geraden Bewegungsbahn verstellbar und in einander entgegengesetzte Richtungen federkraftbeaufschlagt sind, ist es von Vorteil, wenn eine Verstellung der Ausläufe durch manuelles Kraftbeaufschlagen der Ausläufe aufeinander zu erfolgt, wobei die Ausläufe bzw. deren zugeordnete Abgreifermittel durch die Kraftbeaufschlagung aus der jeweils momentanen Halteposition herausverstellt und durch nachfolgendes Loslassen der Ausläufe automatisch entlang der jeweiligen Führungskulisse in die in Umfangsrichtung folgende Halteposition und damit die Auslässe in eine nächste Stoppposition verstellt werden, in welcher sie, gesichert durch die Federmittel definiert bis zur nächsten Kraftbeaufschlagung entgegen der Federkraft verbleiben.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

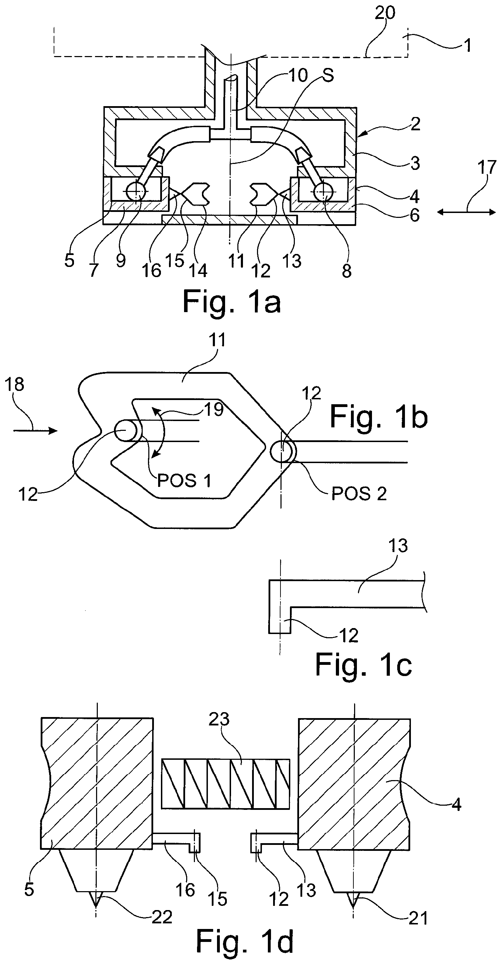

- Fig. 1a: eine Getränkezubereitungsvorrichtung mit zwei Ausläufen in einer Draufsicht,
- Fig. 1 b: eine erste Führungskulissenbahn mit Abgreifer- und Kopplungsmitteln gemäß Fig. 1a in einer vergrößerte Detailansicht,
- Fig. 1c: eine klapprichtige Darstellung der Kopplungsmittel gemäß Fig. 1b mit ihren integrierten Abgreifermitteln,
- Fig. 1 d: eine Frontansicht der Ausläufe gemäß Fig. 1a, wobei aus Übersichtlichkeitsgründen auf die Darstellung der Führungskulissenbahnen verzichtet wurden,
- Fig. 2a: eine alternative Ausgestaltungsform einer Führungskulissenbahn,
- Fig. 2b bis Fig. 2d: die sich aus einer Führungskulissenbahn gemäß Fig. 2a ergebenden Stopppositionen für einen Auslauf,
- Fig. 3a bis Fig. 3d: verschiedene Stopppositionen von Ausläufen,
- Fig. 4a und Fig. 4b: eine von den Fig. 3a bis 3d unterschiedliche Realisierungsform von Ausläufen,
- Fig. 5a und Fig. 5b: eine weitere alternative Ausgestaltungsform von Ausläufen,
- Fig. 6b: weitere Designvarianten von Ausläufen,
- Fig. 7a und Fig. 7b: noch weitere alternative Ausgestaltungsformen von Ausläufen, und
- Fig. 8a und Fig. 8b: eine weitere alternative Ausgestaltungsform von Ausläufen.

In den Figuren sind gleiche Elemente und Elemente mit der gleichen Funktion mit den gleichen Bezugszeichen gekennzeichnet.

In Fig. 1a ist in eine Draufsicht einer Getränkezubereitungsvorrichtung 1, vorzugsweise eine eine Brüheinheit umfassende Kaffeemaschine, beispielsweise eine Kapselmaschine oder ein Kaffeevollautomat gezeigt. Die Getränkezubereitungsvorrichtung 1 umfasst eine Auslaufeinrichtung 2 mit einem Auslaufeinrichtungsgehäuse 3, an welchem ein erster und ein zweiter Auslauf 4, 5 jeweils entlang einer geradlinigen ersten bzw. zweiten, horizontalen Bewegungsbahn verstellbar sind. Jeder Auslauf 4, 5 umfasst ein erstes bzw. ein zweites Auslaufgehäuse 6, 7 sowie ein erstes bzw. zweites Auslaufrohr 8, 9, welches fest mit dem jeweiligen Auslaufgehäuse 6, 7 verbunden ist.

Die Ausläufe 4, 5 sind flexibel fluidleitend verbunden mit einer gemeinsamen Versorgungsleitung 10 zum gleichzeitigen Versorgen beider Ausläufe 4, 5 mit einem hergestellten Getränk, insbesondere Kaffee.

Zum Einstellen, des hier horizontalen, Abstandes zwischen dem ersten und dem zweiten Auslauf 4, 5 sind Einstellmittel vorgesehen. Die Einstellmittel umfassen eine mit dem ersten Auslauf 4 wirkverbundene erste Führungskulissenbahn 11, entlang der ersten Führungskulissenbahn 11 verstellbare erste Abgreifermittel 12 sowie erste Kopplungsmittel 13 zur Übertragung von Druck- und Zugkräften auf den ersten Auslauf 4. Zu erkennen ist, dass die erste Führungskulissenbahn 11 umfangsgeschlossen ist und einen von dem geradlinigen Bewegungsbahnverlauf des ersten Auslaufes 4 abweichenden, ringförmigen, nicht kreisringförmigen Führungsbahnverlauf aufweist, wie später noch im Detail erläutert werden wird. Dem zweiten Auslauf 5 ist analog eine zweite Führungskulissenbahn 14 zugeordnet, sowie zweite Abgreifermittel 15 und zweite Kopplungsmittel 16. Die beiden Ausläufe 4, 5 sind gleichzeitig entlang der die geradlinigen Bewegungsbahnen symbolisierenden Pfleilrichtungen 17 verstellbar, in dem konkreten Ausführungsbeispiel derart, dass der erste und der zweite Auslauf 4, 5 gleichzeitig immer nur aufeinander zu und eine zweite Führungskulissenbahn 14 zugeordnet, sowie zweite Abgreifermittel 15 und zweite Kopplungsmittel 16. Die beiden Ausläufe 5 sind gleichzeitig entlang der die geradlinigen Bewegungsbahnen symbolisierenden Teilen 17 verstellbar, in dem konkreten Ausführungsbeispiel derart, dass der erste und der zweite Auslauf 4, 5 gleichzeitig immer nur aufeinander zu und voneinander weg entlang den Pfeilrichtungen 17 verstellbar sind und zwar zwischen jeweils zwei Stopppositionen.

In Fig. 1b ist die erste Führungskulissenbahn 11 vergrößert dargestellt. Zu erkennen sind zwei mit Pos1 und Pos2 gekennzeichnete erste Haltepositionen, die von Richtungswechseln bzw. Wendepunkten im Bahnverlauf der ersten Führungskulissenbahn 11 gebildet sind. Entlang der Führungskulissenbahn 11 sind erste Abgreifermittel 12 verstellbar, die in Fig. 1b zur Veranschaulichung in beiden Haltepositionen Pos1 und Pos2 dargestellt sind, wobei selbstverständlich immer nur eine Halteposition Pos1 oder Pos2 gleichzeitig anfahrbar ist. Die ersten Abgreifermittel 12 sind in der Pfeilrichtung 18, wie später noch erläutert werden wird federkraftbelastet, so dass die Abgreifermittel 12 in den jeweiligen Wendepunkt, d.h. in die jeweilige Halteposition Pos1 oder Pos2 hinein federkraftbeaufschlagt sind.

Wie sich aus einer Seitenansicht gemäß Fig. 1c ergibt, sind die Abgreifermittel 12 integraler Bestandteil von den ersten Kopplungsmitteln 13 und werden hier beispielhaft von einem winklig abstehenden Endabschnitt gebildet und sind, wie durch die Pfeilrichtungen 19 angedeutet, beim Verstellen entlang der umfangsgeschlossenen Führungsbahn 11 verschwenkbar gelagert. Im Hinblick auf die konkrete Ausgestaltung der ersten Kopplungsmittel 13 gibt es nun unterschiedliche Möglichkeiten. Diese können gemäß einer ersten Ausführungsform beispielsweise nicht gelenkig mit dem ersten Auslauf verbunden sein - in diesem Fall sind die ersten Kopplungsmittel 13 bevorzugt flexibel, insbesondere als flexibler Kunststoffstreifen, ausgebildet, um die Bewegung der Abgreifermittel 12 entlang der Führungskulissenbahn 11 in die geradlinige Bewegungsbahn des ersten Auslaufs umzuwandeln. Alternativ ist es möglich die ersten Kopplungsmittel 13 als starren Arm auszubilden, der dann bevorzugt gelenkig verbunden ist mit dem ersten Auslauf 4, vorzugsweise dem ersten Auslaufgehäuse 6.

Aufgrund der Kopplung des ersten Auslaufs mit der ersten Führungskulissenbahn 11 ist den beiden Haltepositionen Pos1 und Pos2 jeweils eine Stoppposition des ersten Auslaufs 4 zugeordnet. Durch Kraftbeaufschlagen entgegen der Federkraftbelastung 18 werden die Abgreifermittel 12 aus ihrer jeweiligen Halteposition entgegen der Federkraftbelastung herausbewegt und können nach Loslassen bzw. Reduzieren der bevorzugt manuell aufgebrachten Anpresskraft in die jeweilige andere Halteposition einrasten, was mit einem Wechsel der Stoppposition des zugeordneten ersten Auslaufs einhergeht. Werden die Abgreifermittel einmal vollständig in einer Umfangsrichtung um die Führungskulissenbahn bewegt, resultiert eine Hin- und Herbewegung des zugeordneten Auslaufs zwischen den zu den Haltepositionen korrespondierenden Stopppositionen.

Bevorzugt sind die erste und die zweite Führungskulisse 11, 14 spiegelsymmetrisch zu einer Siegelebene S ausgebildet, die in dem gezeigten Ausführungsbeispiel eine Vertikalebene ist, die senkrecht orientiert ist zu einer Frontseite eines Gehäuses 20 der Getränkezubereitungsvorrichtung 1 sowie senkrecht zu einer Standfläche.

In Fig. 1d sind der erste und der zweite Auslauf 4, 5 in einer Frontansicht gezeigt. Zu erkennen sind ein erstes und ein zweites Auslaufende 21, 22, die vertikal orientiert sind. Gezeigt sind zudem gemeinsame Federmittel 23 zum mittelbaren Federkraftbeaufschlagen beider Abgreifermittel. Zu diesem Zweck greifen die Federmittel 23 in dem gezeigten Ausführungsbeispiel an den Ausläufen 4, 5, genauer den Auslaufgehäusen 6, 7 an. Zu erkennen sind zudem die ersten und zweiten Abgreifermittel 12, 15 mit den integralen ersten bzw. zweiten Kopplungsmitteln 13, 16. Aus Übersichtlichkeitsgründen wurde auf die Darstellung der in Fig. 1a angedeuteten Führungskulissenbahnen verzichtet, die, wie in Fig. 1a gezeigt in einer Horizontalebene angeordnet sein können - eine Anordnung in einer davon abweichenden Ebene, beispielsweise einer Vertikalebene ist alternativ realisierbar.

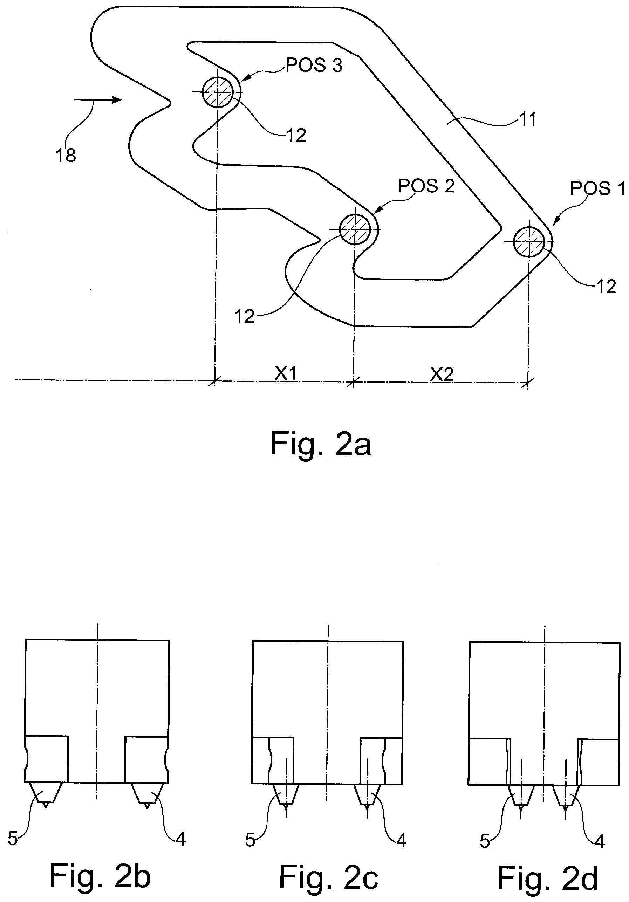

In Fig. 2a ist eine alternativ ausgestaltete erste Führungskulissenbahn 11 gezeigt, die insgesamt drei in Umfangsrichtung beabstandete erste Haltepositionen Pos1, Pos2 und Pos3 für die ersten Abgreifermittel 12 definiert. Der Abstand zwischen den Haltepositionen Pos2 und Pos3 beträgt X1 und zwischen Haltepositionen Pos1 und Pos2 X2 in horizontaler Richtung - wenn sich die Abgreifermittel 12 in Pos3 befinden, sind die Ausläufe daher minimal und in Pos1 maximal voneinander beabstandet. Zu jeder der drei Haltepositionen korrespondiert eine Stoppposition des zugeordneten Auslaufs.

Aus Übersichtlichkeitsgründen ist die bevorzugt spiegelsymmetrisch ausgebildete zweite Führungskulissenbahn für den zweiten Auslauf nicht gezeigt. Unterstellt, dass eine solche zweite Führungskulissenbahn mit zugehörigen Abgreifer- und Kopplungsmittel für den zweiten Auslauf existiert, resultieren die in den Fig. 2b bis 2d gezeigten Relativpositionen bzw. Stopppositionen des ersten und zweiten Auslaufs 4, 5. In Fig. 2b befinden sich die ersten Abgreifermittel in Position 1 und die zweiten Abgreifermittel in einer korrespondierenden, maximal weit weg verstellten Halteposition, so dass die gezeigten, maximal voneinander horizontal entfernten Stopppositionen für den ersten und zweiten Auslauf 4, 5 resultieren. In der Darstellung gemäß Fig. 2c befinden sich die ersten Abgreifermittel in der Halteposition Pos2 und die zweiten Abgreifermittel in der spiegelsymmetrisch hierzu angeordneten korrespondierenden Halteposition, so dass die beiden mittleren Stopppositionen für die Ausläufe 4, 5 gemäß Fig. 2c resultieren. In Fig. 2d befinden sich die ersten Abgreifermittel in der Halteposition Pos3 und die zweiten Abgreifermittel in der korrespondierenden, nicht gezeigten Halteposition, so dass die minimal voneinander beabstandeten Stopppositionen für die Ausläufe 4, 5 gemäß Fig. 2d resultieren.

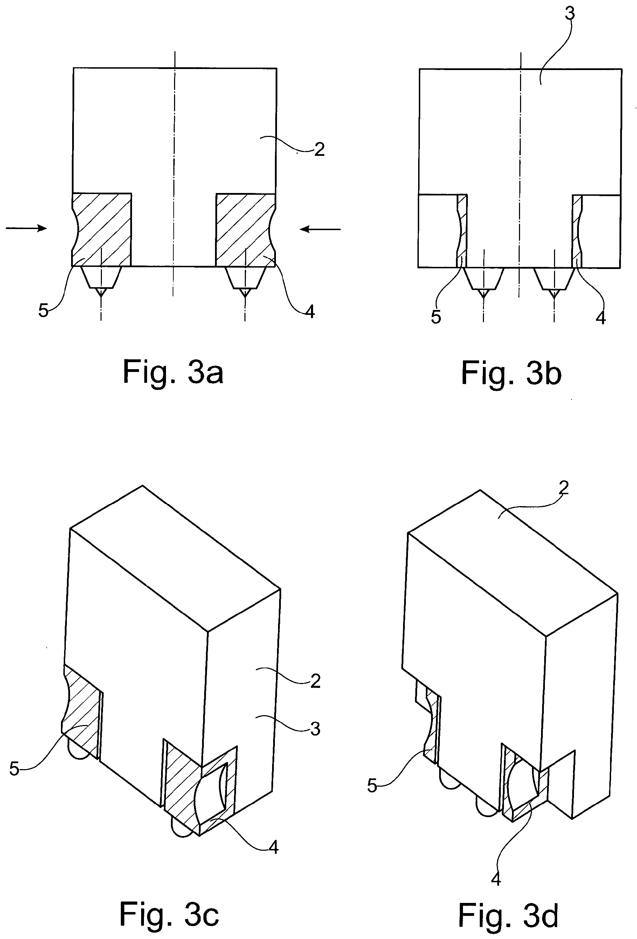

In den Fig. 3a und 3c ist in unterschiedlichen Ansichten eine Auslaufeinrichtung 2 gezeigt mit zwei Ausläufen 4, 5, die sich in horizontal maximal voneinander beabstandeten Stopppositionen befinden. Die Auslaufeinrichtung 2 ist vertikal verstellbar angeordnet, während die Ausläufe 4, 5 entlang jeweils einer horizontalen, geraden Bewegungsbahn verstellbar sind.

Fig. 3b und 3d zeigt die Ausläufe 4, 5 der Auslaufeinrichtung 2 gemäß den Fig. 3a und 3c in minimal voneinander beabstandeten definierten Stopppositionen. Die jeweils zwei Stopppositionen können durch die Realisierung zweier spiegelsymmetrisch ausgebildeter Führungskulissenbahnen realisiert werden, wobei eine erste Führungskulissenbahn wie in Fig. 1b gezeigt ausgebildet sein kann.

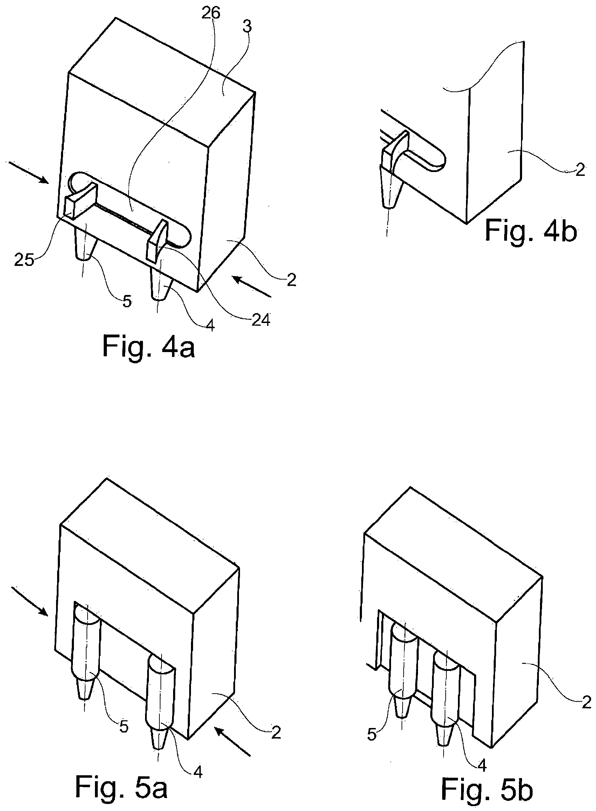

Fig. 4a und 4b zeigen eine von den Fig. 3a bis 3d unterschiedliche Realisierungsform einer Auslaufeinrichtung 2. Jeder Auslauf 4, 5 weist einen zugehörigen Griffabschnitt 24, 25 auf, wobei die Griffabschnitte 24, 25 durch eine vorderseitige Öffnung 26 in Gehäuse 3 ragen.

Fig. 4a zeigt zwei maximal beabstandete Stopppositionen, während Fig. 4b minimal entfernte Stopppositionen zeigt. Auch bei dem Ausführungsbeispiel gemäß dem Fig. 4a und 4b kann eine beispielsweise in Fig.1b gezeigte Führungskulissenbahn zugrunde liegen. Selbstverständlich ist es auch möglich, mindestens eine weitere Relativposition bzw. Stoppposition für die Ausläufe 4, 5 entlang ihrer geradlinigen Bewegungsbahn zu realisieren, wobei dann beispielsweise eine in Fig. 2a gezeigte Führungskulissenbahn zum Einsatz kommen kann.

Fig. 5a und 5b zeigen weitere konstruktive Ausgestaltungsmöglichkeiten von Ausläufen 4, 5, wobei hier die Ausläufe 4, 5 im Vergleich zu dem Ausführungsbeispiel 4a und 4b weiter freigelegt sind.

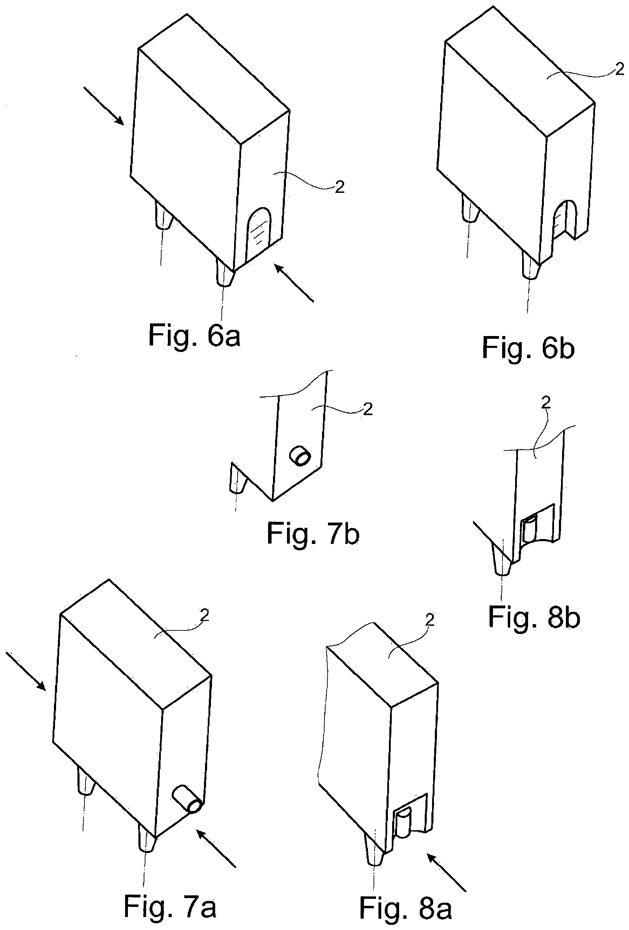

In den Fig. 6a und 6b bzw. 7a und 7b bzw. 8a und 8b sind weitere Ausgestaltungsformen von Auslaufeinrichtungen 2 gezeigt - allen gemeinsam ist eine seitliche Betätigbarkeit der entsprechenden Ausläufe. Die gezeigten Pfeile symbolisieren eine Kraftaufbringungseinrichtung zum Verstellen der Ausläufe sowie gleichzeitig der Abgreifermittel zwischen den Stopp- bzw. Haltepositionen.

### Bezugszeichenliste

- 1: Getränkezubereitungsvorrichtung
- 2: Auslaufeinrichtung
- 3: Auslaufeinrichtungsgehäuse
- 4: erster Auslauf
- 5: zweiter Auslauf
- 6: erstes Auslaufgehäuse
- 7: zweites Auslaufgehäuse
- 8: ersten Auslaufrohr
- 9: zweites Auslaufrohr
- 10: Versorgungsleitung
- 11: erste Führungskulissenbahn
- 12: erste Abgreifermittel
- 13: erste Kopplungsmittel
- 14: zweite Führungskulissenbahn
- 15: zweite Abgreifermittel
- 16: zweite Kopplungsmittel
- 17: Pfeilrichtung
- 18: Pfeilrichtung (Federkraftbelastung)
- 19: Pfeilrichtung (Verschwenkbarkeit)
- 20: Gehäuse der Getränkezubereitungsvorrichtung
- 21: erstes Auslaufende
- 22: zweites Auslaufende
- 23: Federmittel
- 24: Griffabschnitt
- 25: Griffabschnitt
- 26: Öffnung

- S: Spiegelebene
- Pos1, Pos2, Pos3: unterschiedliche Haltepositionen

## Patentansprüche

1. Getränkezubereitungsvorrichtung (1), insbesondere Kaffeemaschine, mit einem ersten Auslauf (4) und einem zweiten Auslauf (5), die vorzugsweise mit einer gemeinsamen Versorgungsleitung (10) verbunden sind, sowie mit Einstellmitteln zum Einstellen des Abstandes zwischen dem ersten (4) und dem zweiten Auslauf (5),
**dadurch gekennzeichnet,**
**dass** die Einstellmittel eine erste Führungskulissenbahn (11) umfassen, und dass der entlang einer ersten Bewegungsbahn verstellbare erste Auslauf (4) über erste Kopplungsmitteln (13) mit entlang der ersten Führungskulissenbahn (11) verstellbaren ersten Abgreifermitteln (12) gekoppelt ist, und dass die erste Führungskulissenbahn (11) mindestens zwei unterschiedliche erste Haltepositionen für die ersten Abgreifermittel (12) und damit aufgrund der Kopplung mit den ersten Haltepositionen korrespondierende erste Stopppositionen für den ersten Auslauf (4) entlang seiner ersten Bewegungsbahn definiert, und dass den ersten Abgreifermitteln (12) Federmittel (23) zugeordnet sind, die die ersten Abgreifermittel (12) in die jeweilige erste Halteposition hinein mit einer Federkraft beaufschlagend ausgebildet und angeordnet sind,
und
**dass** die Einstellmittel eine zweite Führungskulissenbahn (14) umfassen, und dass der entlang einer zweiten Bewegungsbahn verstellbare zweite Auslauf (5) über zweite Kopplungsmitteln (16) mit entlang der zweiten Führungskulissenbahn (14) verstellbaren zweiten Abgreifermitteln (15) gekoppelt ist, und dass die zweite Führungskulissenbahn (14) mindestens zwei unterschiedliche zweite Haltepositionen für die zweiten Abgreifermittel (15) und damit aufgrund der Kopplung mit den zweiten Haltepositionen korrespondierende zweite Stopppositionen für den zweiten Auslauf (5) entlang seiner zweiten Bewegungsbahn definiert, und dass den zweiten Abgreifermitteln (15) Federmittel (23) zugeordnet sind, die die zweiten Abgreifermittel (15) in die jeweilige zweite Halteposition hinein mit einer Federkraft beaufschlagend ausgebildet und angeordnet sind.

2. Getränkezubereitungsvorrichtung nach Anspruch 1,
**dadurch gekennzeichnet,**
**dass** die erste und/oder die zweite Führungskulissenbahn (11, 14) umfangsgeschlossen sind/ist.

3. Getränkezubereitungsvorrichtung nach einem der Ansprüche 1 oder 2,
**dadurch gekennzeichnet,**
**dass** der erste Auslauf (4) über die ersten Kopplungsmittel (13) derart mit den ersten, entlang der ersten Führungskulissenbahn (11) verstellbaren ersten Abgreifermitteln (12) gekoppelt und über erste Führungsmittel geführt ist, dass der Bahnverlauf der ersten Bewegungsbahn von dem Bahnverlauf der ersten Führungskulissenbahn (11) abweicht, insbesondere derart, dass die erste Bewegungsbahn ausschließlich entlang einer ersten Geraden verläuft und/oder dass der zweite Auslauf (5) über die zweiten Kopplungsmittel (16) derart mit den zweiten, entlang der zweiten Führungskulissenbahn (14) verstellbaren zweiten Abgreifermitteln (15) gekoppelt und über zweite Führungsmittel geführt ist, dass der Bahnverlauf der zweiten Bewegungsbahn von dem Bahnverlauf der zweiten Führungskulissenbahn (14) abweicht, insbesondere derart, dass die zweite Bewegungsbahn ausschließlich entlang einer zweiten Geraden verläuft.

4. Getränkezubereitungsvorrichtung nach Anspruch 3,
**dadurch gekennzeichnet,**
**dass** die ersten Kopplungsmittel (13) zumindest abschnittsweise flexibel ausgebildet sind und/oder mindestens eine Gelenkverbindung umfassen und/oder dass die zweiten Kopplungsmittel (16) zumindest abschnittsweise flexibel ausgebildet sind und/oder mindestens eine Gelenkverbindung umfassen.

5. Getränkezubereitungsvorrichtung nach einem der Ansprüche 3 oder 4,
**dadurch gekennzeichnet,**
**dass** die ersten Abgreifermittel (12) und die ersten Kopplungsmittel (13) von einem gemeinsamen Bauteil, insbesondere einem ersten starren oder flexiblen Arm, gebildet sind, das vorzugsweise gelenkig mit der ersten Führungskulissenbahn (11) und/oder dem ersten Auslauf (4) verbunden ist und/oder dass die zweiten Abgreifermittel (15) und die zweiten Kopplungsmittel (16) von einem gemeinsamen Bauteil, insbesondere einem zweiten starren oder flexiblen Arm, gebildet sind, das vorzugsweise gelenkig mit der zweiten Führungskulissenbahn (14) und/oder dem zweiten Auslauf (5) verbunden ist.

6. Getränkezubereitungsvorrichtung nach einem der Ansprüche 3 bis 5,
**dadurch gekennzeichnet,**
**dass** der erste Auslauf (4) bei einem vollständigen Umlauf der ersten Abgreifermittel (12) entlang der ersten Kulissenführungsbahn (11) entlang der ersten Bewegungsbahn einmal hin und her bewegbar ist und/oder dass der zweite Auslauf (5) bei einem vollständigen Umlauf der zweiten Abgreifermittel (15) entlang der zweiten Kulissenführungsbahn (14) entlang der zweiten Bewegungsbahn einmal hin und her bewegbar ist.

7. Getränkezubereitungsvorrichtung nach einem der vorhergehenden Ansprüche,
**dadurch gekennzeichnet,**
**dass** die Federmittel (23) den ersten Auslauf (4) und den zweiten Auslauf (5) voneinander weg federkraftbeaufschlagen.

8. Getränkezubereitungsvorrichtung nach einem der vorhergehenden Ansprüche,
**dadurch gekennzeichnet,**
**dass** die ersten und die zweiten Abgreifermittel (12, 15), insbesondere über an den Ausläufen (4, 5) angreifende, gemeinsame Federmittel (23), insbesondere eine zwischen den Ausläufen (4, 5) angeordnete Druckfeder, bevorzugt in einander entgegengesetzte Richtungen, bevorzugt Horizontalrichtungen, federkraftbeaufschlagt sind.

9. Getränkezubereitungsvorrichtung nach einem der vorhergehenden Ansprüche,
**dadurch gekennzeichnet,**
**dass** die unterschiedlichen ersten Haltepositionen durch einen Richtungswechsel der ersten Führungskulissenbahn (11) und/oder einen Sackgassenabschnitt der ersten Führungskulissenbahn (11) definiert sind und/oder dass die unterschiedlichen zweiten Haltepositionen durch einen Richtungswechsel der zweiten Führungskulissenbahn (14) und/oder einen Sackgassenabschnitt der zweiten Führungskulissenbahn (14) definiert sind.

10. Getränkezubereitungsvorrichtung nach einem der vorhergehenden Ansprüche,
**dadurch gekennzeichnet,**
**dass** für den Fall des Vorsehens einer ersten und einer zweiten Führungskulissenbahn (11, 14), diese und/oder die Bewegungsbahnen der Ausläufe (4, 5) spiegelsymmetrisch, insbesondere zu einer Vertikalebene ausgebildet sind.

11. Getränkezubereitungsvorrichtung nach einem der vorhergehenden Ansprüche,
**dadurch gekennzeichnet,**
**dass** die Ausläufe (4, 5) zusammen mit den Einstellmitteln vertikal verstellbar angeordnet sind, wobei bevorzugt Auslaufenden der Ausläufe in jeder Position entlang der ersten bzw. zweiten Bewegungsbahn vertikal und parallel zueinander orientiert sind.

12. Getränkezubereitungsvorrichtung nach einem der vorhergehenden Ansprüche,
**dadurch gekennzeichnet,**
**dass** sich die den ersten Abgreifermitteln (12) zugeordnete Federmittel (23) an dem ersten Auslauf (4) abstützen und/oder dass sich die den zweiten Abgreifermitteln zugeordnete Federmittel (23) an dem zweiten Auslauf (5) abstützen.

13. Verfahren zum Einstellen des Abstandes zwischen einem ersten Auslauf (4) und einem zweiten Auslauf (5) einer Getränkezubereitungsvorrichtung, insbesondere nach einem der vorhergehenden Ansprüche,
**dadurch gekennzeichnet,**
**dass** der über erste Kopplungsmittel (13) mit entlang einer ersten Führungskulissenbahn (11) verstellbaren ersten Abgreifermitteln (12) gekoppelte erste Auslauf (4) zum Einstellen des Abstandes entlang einer ersten Bewegungsbahn in eine von mindestens zwei ersten Stopppositionen verstellt wird, die von jeweils einer ersten Halteposition für die ersten Abgreifermittel (12) entlang der ersten Führungskulissenbahn (11) definiert werden, und dass die ersten Abgreifermittel (12), insbesondere mittelbar über den ersten Auslauf (4), mit einer Federkraft in die jeweilige erste Halteposition beaufschlagt werden,
und
**dass** der über zweite Kopplungsmittel (16) mit entlang einer zweiten Führungskulissenbahn (14) verstellbaren zweiten Abgreifermitteln (15) gekoppelte zweite Auslauf (5) zum Einstellen des Abstandes entlang einer zweiten Bewegungsbahn in eine von mindestens zwei zweiten Stopppositionen verstellt wird, die von jeweils einer zweiten Halteposition für die zweiten Abgreifermittel (15) entlang der zweiten Führungskulissenbahn (14) definiert werden, und dass die zweiten Abgreifermittel (15), insbesondere mittelbar über den zweiten Auslauf (5), mit einer Federkraft in die jeweilige zweite Halteposition beaufschlagt werden.

14. Verfahren nach Anspruch 13,
**dadurch gekennzeichnet,**
**dass** der erste und der zweite Auslauf (4, 5) synchron entlang der jeweiligen, bevorzugt geraden, Bewegungsbahn verstellt werden, bevorzugt in einander entgegengesetzte Richtungen.

15. Verfahren nach einem der Ansprüche 13 bis 14,
**dadurch gekennzeichnet,**
**dass** die ersten Kopplungsmittel (13) bei einer vollständigen hin und her Bewegung des ersten Auslaufes (4) entlang der ersten Bewegungsbahn einmal um die erste Führungskulissenbahn (11) umlaufen und/oder dass die zweiten Kopplungsmittel (16) bei einer vollständigen hin und her Bewegung des zweiten Auslaufes (5) entlang der zweiten Bewegungsbahn einmal um die zweite Führungskulissenbahn (14) umlaufen.

## Claims

1. Beverage preparation device (1), in particular coffee machine, having a first outlet (4) and a second outlet (5) which are preferably connected to a common supply line (10), as well as having adjustment means for adjusting the distance between the first (4) and the second outlet (5),
**characterized in that**
the adjustment means comprise a first guidance slide track (11), and **in that** the first outlet (4) adjustable along a first movement track is coupled to first gripping means (12) adjustable along the first guidance slide track (11) via first coupling means (13), and **in that** the first guidance slide track (11) defines at least two different first holding positions for the first gripping means (12) and therefore first stopping positions, which, due to the coupling, correspond to the first holding positions for the first outlet (4) along the first movement track thereof, and **in that** spring means (23) are assigned to the first gripping means (12), which are configured and arranged in such a way that they apply the first gripping means (12) with a spring force into the respective holding position,
and
**in that** the adjustment means comprise a second guidance slide track (14), and **in that** the second outlet (5) adjustable along a second movement track is coupled to second gripping means (15) adjustable along the second guidance slide track (14) via second coupling means (16), and **in that** the second guidance slide track (14) defines at least two different second holding positions for the second gripping means (15) and therefore second stopping positions, which, due to the coupling, correspond to the second holding positions, for the second outlet (5) along the second movement track thereof, and **in that** spring means (23) are assigned to the second gripping means (15), the spring means being configured and arranged in such a way, as to apply the second gripping means (15) with a spring force into the respective holding position.

2. Beverage preparation device according to claim 1,
**characterized in that**
the first and/or second guidance slide track (11, 14) is/are circumferentially closed.

3. Beverage preparation device according to one of claims 1 or 2,
**characterized in that**
the first outlet (4) is coupled to first gripping means (12) adjustable along the first guidance slide track (11) via the first coupling means (13) and is guided via first guiding means in such a way that the track course of the first movement track deviates from the track course of the first guidance slide track (11), in particular in such a way that the first movement track exclusively runs along a first straight line and/or **in that** the second outlet (5) is coupled to second gripping means (15) adjustable along the second guidance slide track (14) via second coupling means (16) and is guided via second guidance means in such a way that the track course of the second movement track deviates from the track course of the second guidance slide track (14), in particular in such a way that the second movement track exclusively runs along a second straight line.

4. Beverage preparation device according to claim 3,
**characterized in that**
the first coupling means (13) are configured to be flexible at least in sections and/or comprise at least one joint connection and/or **in that** the second coupling means (16) are configured to be flexible at least in sections and/or comprise at least one joint connection.

5. Beverage preparation device according to one of claims 3 or 4,
**characterized in that**
the first gripping means (12) and the first coupling means (13) are formed by a common component, in particular a first rigid or flexible arm, which component is preferably connected to the first guidance slide track (11) and/or the first outlet (4) in an articulated manner, and/or **in that** the second gripping means (15) and the second coupling means (16) are formed by a common component, in particular a second rigid or flexible arm, which is preferably connected to the second guidance slide track (14) and/or the second outlet (5) in an articulated manner.

6. Beverage preparation device according to one of claims 3 to 5,
**characterized in that**
the first outlet (4), upon a complete revolution of the first gripping means (12) along the first guidance slide track (11), is movable back and forth one time along the first movement track, and/or **in that** the second outlet (5), upon a complete revolution of the second gripping means (15), along the second guidance slide track (14) is movable back and forth one time along the second movement track.

7. Beverage preparation device according to one of the preceding claims,
**characterized in that**
the spring means (23) apply the first outlet (4) and the second outlet (5) with a spring force away from each another.

8. Beverage preparation device according to one of the preceding claims,
**characterized in that**
the first and second gripping means (12, 15) are applied with a spring force, in particular via common spring means (23) engaging on the outlets (4, 5), in particular a pressure spring arranged between the outlets (4, 5), preferably in directions opposite to one another, preferably horizontal directions.

9. Beverage preparation device according to one of the preceding claims,
**characterized in that**
the different first holding positions are defined by a change in direction of the first guidance slide track (11) and/or a dead-end section of the first guidance slide track (11), and/or **in that** the different second holding positions are defined by a change in direction of the second guidance slide track (14) and/or a dead-end section of the second guidance slide track (14).

10. Beverage preparation device according to one of the preceding claims,
**characterized in that**
in the case of providing a first and a second guidance slide track (11, 14), these and/or the movement tracks of the outlets (4, 5) are configured mirrorsymmetrical, in particular with respect to a vertical plane.

11. Beverage preparation device according to one of the preceding claims,
**characterized in that**
the outlets (4, 5) together with the adjustment means are arranged to be vertically adjustable, wherein preferably outlet ends are oriented vertical or parallel to one another in each position along the first or second movement track, respectively.

12. Beverage preparation device according to one of the preceding claims,
**characterized in that**
the spring means (23) assigned to the first gripping means (12) are supported on the first outlet (4), and/or **in that** the spring means (23) assigned to the second gripping means are supported on the second outlet (5).

13. Method for adjusting the distance between a first outlet (4) and a second outlet (5) of a beverage preparation device, in particular according to one of the preceding claims,
**characterized in that**
for adjusting the distance, the first outlet (4), coupled to first gripping means (12) which are adjustable along a first guidance slide track (11) via first coupling means (13), is adjusted along a first movement track into one of at least two first stopping positions which are defined by in each case a first holding position for the first gripping means (12) along the first guidance slide track (11), and **in that** the first gripping means (12) are applied with a spring force into the respective first holding position, in particular indirectly via the first outlet (4),
and
for adjusting the distance, the second outlet (5), coupled with second gripping means (15) which are adjustable along a second guidance slide track (14) via second coupling means (16), is adjusted along a second movement track into one of at least two second stopping positions which are defined by in each case a second holding position for the second gripping means (15) along the second guidance slide track (14), and **in that** the second gripping means (15) are applied with a spring force into the respective second holding position, in particular indirectly via the second outlet (5).

14. Method according to claim 13,
**characterized in that**
the first and the second outlet (4, 5) are adjusted synchronously along the respective, preferably straight, movement track, preferably in directions opposite one another.

15. Method according to one of claims 13 to 14,
**characterized in that**
the first coupling means (13), upon a complete back-and-forth-movement of the first outlet (4) along the first movement track revolve one time around the first guidance
slide track (11), and/or **in that** the second coupling means (16), upon a complete back-and-forth-movement of the second outlet (5) along the second movement track revolve one time around the second guidance slide track (14).

## Revendications

1. Dispositif de préparation de boissons (1), en particulier machine à café, comprenant une première sortie d'écoulement (4) et une deuxième sortie d'écoulement (5) qui sont de préférence connectées à une conduite d'alimentation commune (10), et comprenant des moyens d'ajustement pour ajuster la distance entre la première (4) et la deuxième (5) sortie d'écoulement,
**caractérisé en ce que**
les moyens d'ajustement comprennent une première voie de coulisse de guidage (11) et **en ce que** la première sortie d'écoulement (4) pouvant être déplacée le long d'une première voie de déplacement est accouplée par le biais de premiers moyens d'accouplement (13) à des premiers moyens de saisie (12) pouvant être déplacés le long de la première voie de coulisse de guidage (11), et **en ce que** la première voie de coulisse de guidage (11) définit au moins deux premières positions de retenue différentes pour les premiers moyens de saisie (12) et par conséquent du fait de l'accouplement avec les premières positions de retenue, des premières positions d'arrêt correspondantes pour la première sortie d'écoulement (4) le long de sa première voie de déplacement, et **en ce que** les premiers moyens de saisie (12) sont associés à des moyens de ressort (23) qui sont réalisés et disposés de manière à solliciter avec une force de ressort les premiers moyens de saisie (12) dans la première position de retenue respective, et
**en ce que** les moyens d'ajustement comprennent une deuxième voie de coulisse de guidage (14), et **en ce que** la deuxième sortie d'écoulement (5) pouvant être déplacée le long d'une deuxième voie de déplacement est accouplée par le biais de deuxièmes moyens d'accouplement (16) à des deuxièmes moyens de saisie (15) pouvant être déplacés le long de la deuxième voie de coulisse de guidage (14), et **en ce que** la deuxième voie de coulisse de guidage (14) définit au moins deux deuxièmes positions de retenue différentes pour les deuxièmes moyens de saisie (15) et par conséquent, du fait de l'accouplement avec les deuxièmes positions de retenue, des deuxièmes positions d'arrêt correspondantes pour la deuxième sortie d'écoulement (5) le long de sa deuxième voie de déplacement, et **en ce que** les deuxièmes moyens de saisie (15) sont associés à des moyens de ressort (23) qui sont réalisés et disposés de manière à solliciter avec une force de ressort les deuxièmes moyens de saisie (15) dans la deuxième position de retenue respective.

2. Dispositif de préparation de boissons selon la revendication 1,
**caractérisé en ce que**
la première et/ou la deuxième voie de coulisse de guidage (11, 14) est/sont fermée(s) sur la périphérie.

3. Dispositif de préparation de boissons selon l'une quelconque des revendications 1 ou 2,
**caractérisé en ce que**
la première sortie d'écoulement (4) est accouplée par le biais des premiers moyens d'accouplement (13) aux premiers moyens de saisie (12) pouvant être déplacés le long de la première voie de coulisse de guidage (11) et est guidée par le biais de premiers moyens de guidage de telle sorte que la trajectoire de voie de la première voie de déplacement s'écarte de la trajectoire de voie de la première voie de coulisse de guidage (11), en particulier de telle sorte que la première voie de déplacement s'étende exclusivement le long d'une première droite et/ou **en ce que** la deuxième sortie d'écoulement (5) est accouplée par le biais des deuxièmes moyens d'accouplement (16) aux deuxièmes moyens de saisie (15) pouvant être déplacés le long de la deuxième voie de coulisse de guidage (14) et est guidée par le biais de deuxièmes moyens de guidage de telle sorte que la trajectoire de voie de la deuxième voie de déplacement s'écarte de la trajectoire de voie de la deuxième voie de coulisse de guidage (14), en particulier de telle sorte que la deuxième voie de déplacement s'étende exclusivement le long d'une deuxième droite.

4. Dispositif de préparation de boissons selon la revendication 3,
**caractérisé en ce que**
les premiers moyens d'accouplement (13) sont réalisés au moins en partie sous forme flexible et/ou comprennent au moins une liaison articulée et/ou **en ce que** les deuxièmes moyens d'accouplement (16) sont réalisés au moins en partie de manière flexible et/ou comprennent au moins une liaison articulée.

5. Dispositif de préparation de boissons selon l'une quelconque des revendications 3 ou 4,
**caractérisé en ce que**
les premiers moyens de saisie (12) et les premiers moyens d'accouplement (13) sont formés par un composant commun, en particulier un premier bras rigide ou flexible, qui est connecté de préférence de manière articulée à la première voie de coulisse de guidage (11) et/ou à la première sortie d'écoulement (4) et/ou **en ce que** les deuxièmes moyens de saisie (15) et les deuxièmes moyens d'accouplement (16) sont formés par un composant commun, en particulier un deuxième bras rigide ou flexible, qui est connecté de préférence de manière articulée à la deuxième voie de coulisse de guidage (14) et/ou à la deuxième sortie d'écoulement (5).

6. Dispositif de préparation de boissons selon l'une quelconque des revendications 3 à 5,
**caractérisé en ce que**
la première sortie d'écoulement (4), lors d'un tour complet des premiers moyens de saisie (12) le long de la première voie de guidage de coulisse (11), peut être déplacée une fois d'avant en arrière le long de la première voie de déplacement et/ou **en ce que** la deuxième sortie d'écoulement (5), lors d'un tour complet des deuxièmes moyens de saisie (15) le long de la deuxième voie de guidage de coulisse (14), peut être déplacée une fois d'avant en arrière le long de la deuxième voie de déplacement.

7. Dispositif de préparation de boissons selon l'une quelconque des revendications précédentes,
**caractérisé en ce que**
les moyens de ressort (23) sollicitent par une force de ressort la première sortie d'écoulement (4) et la deuxième sortie d'écoulement (5) à l'écart l'une de l'autre.

8. Dispositif de préparation de boissons selon l'une quelconque des revendications précédentes,
**caractérisé en ce que**
les premiers et deuxièmes moyens de saisie (12, 15) sont sollicités par une force de ressort, en particulier par le biais de moyens de ressort communs (23) agissant sur les sorties d'écoulement (4, 5), en particulier un ressort de compression disposé entre les sorties d'écoulement (4, 5), de préférence dans des directions mutuellement opposées, de préférence des directions horizontales.

9. Dispositif de préparation de boissons selon l'une quelconque des revendications précédentes,
**caractérisé en ce que**
les premières positions de retenue différentes sont définies par un changement de direction de la première voie de coulisse de guidage (11) et/ou une portion en cul-de-sac de la première voie de coulisse de guidage (11) et/ou **en ce que** les deuxièmes positions de retenue différentes sont définies par un changement de direction de la deuxième voie de coulisse de guidage (14) et/ou par une portion en cul-de-sac de la deuxième voie de coulisse de guidage (14).

10. Dispositif de préparation de boissons selon l'une quelconque des revendications précédentes,
**caractérisé en ce**
**que** dans le cas où une première et une deuxième voie de coulisse de guidage (11, 14) sont prévues, celles-ci et/ou les voies de déplacement des sorties d'écoulement (4, 5) sont réalisées avec une symétrie spéculaire, en particulier par rapport à un plan vertical.

11. Dispositif de préparation de boissons selon l'une quelconque des revendications précédentes,
**caractérisé en ce que**
les sorties d'écoulement (4, 5), conjointement avec les moyens d'ajustement, sont disposées de manière déplaçable verticalement, les extrémités de sortie d'écoulement des sorties d'écoulement étant de préférence orientées dans chaque position le long de la première, respectivement de la deuxième, voie de déplacement verticalement et parallèlement les unes aux autres.

12. Dispositif de préparation de boissons selon l'une quelconque des revendications précédentes,
**caractérisé en ce que**
les moyens de ressort (23) associés aux premiers moyens de saisie (12) s'appuient contre la première sortie d'écoulement (4) et/ou **en ce que** les moyens de ressort (23) associés aux deuxièmes moyens de saisie s'appuient contre la deuxième sortie d'écoulement (5).

13. Procédé d'ajustement de la distance entre une première sortie d'écoulement (4) et une deuxième sortie d'écoulement (5) d'un dispositif de préparation de boissons, en particulier selon l'une quelconque des revendications précédentes, **caractérisé en ce que** la première sortie d'écoulement (4) accouplée par le biais de premiers moyens d'accouplement (13) à des premiers moyens de saisie (12) pouvant être déplacés le long d'une première voie de coulisse de guidage (11), pour l'ajustement de la distance le long d'une première voie de déplacement, est déplacée dans l'une d'au moins deux premières positions d'arrêt, qui sont définies à chaque fois par une première position de retenue pour les premiers moyens de saisie (12) le long de la première voie de coulisse de guidage (11), et **en ce que** les premiers moyens de saisie (12) sont sollicités par une force de ressort, en particulier de manière indirecte par le biais de la première sortie d'écoulement (4), dans la première position de retenue respective,
et
**en ce que** la deuxième sortie d'écoulement (5) accouplée par le biais de deuxièmes moyens d'accouplement (16) à des deuxièmes moyens de saisie (15) pouvant être déplacés le long d'une deuxième voie de coulisse de guidage (14), pour l'ajustement de la distance le long d'une deuxième voie de déplacement, est déplacée dans l'une d'au moins deux deuxièmes positions d'arrêt qui sont définies à chaque fois par une deuxième position de retenue pour les deuxièmes moyens de saisie (15) le long de la deuxième voie de coulisse de guidage (14), et **en ce que** les deuxièmes moyens de saisie (15) sont sollicités avec une force de ressort, en particulier de manière indirecte par le biais de la deuxième sortie d'écoulement (5), dans la deuxième position de retenue respective.

14. Procédé selon la revendication 13, **caractérisé en ce que**
la première et la deuxième sortie d'écoulement (4, 5) sont déplacées de manière synchrone le long de la voie de déplacement respective, de préférence droite, de préférence dans des directions mutuellement opposées.

15. Procédé selon l'une quelconque des revendications 13 à 14,
**caractérisé en ce que**
les premiers moyens d'accouplement (13), lors d'un déplacement complet vers l'avant et vers l'arrière de la première sortie d'écoulement (4) le long de la première voie de déplacement, tournent une fois autour de la première voie de coulisse de guidage (11) et/ou **en ce que** les deuxièmes moyens d'accouplement (16), lors d'un déplacement complet vers l'avant et vers l'arrière de la deuxième sortie d'écoulement (5) le long de la deuxième voie de déplacement, tournent une fois autour de la deuxième voie de coulisse de guidage (14).
